# EUROPEAN PATENT SPECIFICATION

(11) **EP 2 988 619 B1**
(45) Date of publication and mention of the grant of the patent: **29.06.2016**
(21) Application number: 14708874.4
(22) Date of filing: 07.03.2014
(51) Int. Cl.: A23L 33/17, A23J 1/14, A23L 11/00, A23L 11/30

(54) **SOYBEAN EXTRACTION PROCESS**
SOJABOHNEN-EXTRAKTIONSVERFAHREN
PROCÉDÉ D'EXTRACTION DE SOJA

(30) Priority: 27.03.2013 EP 13161326
(43) Date of publication of application: 02.03.2016
(73) Proprietor: Unilever PLC, London, Greater London EC4Y 0DY (GB); Unilever N.V., 3013 AL Rotterdam (NL)
(72) Inventor: WIJNGAARD, Hilde Henny, NL-3133 AT Vlaardingen (NL); ZUIDAM, Nicolaas Jan, NL-3133 AT Vlaardingen (NL)
(74) Representative: Askew, Sarah Elizabeth
(86) International application number: PCT/EP2014/054503
(87) International publication number: WO 2014/154472

(56) References cited:
- CN-A- 102 585 026
- CN-A- 102 626 205
- KR-A- 20070 028 776
- US-A1- 2009 317 533
- K. J. MOULTON AND L. C. WANG: "A Pilot-Plant Study of Continuous Ultrasonic Extraction of Soybean Protein", JOURNAL OF FOOD SCIENCE , vol. 47 1982, pages 1127-1129, XP002714168, Retrieved from the Internet: URL:http://onlinelibrary.wiley.com/doi/10. 1111/j.1365-2621.1982.tb07632.x/pdf [retrieved on 2013-10-03]

## Description

### TECHNICAL FIELD OF THE INVENTION

The present invention relates to a process to provide soy base from soybeans, wherein the soy base comprises extracted water-soluble and/or water-dispersible compounds from soybeans.

### BACKGROUND OF THE INVENTION

Soy-based beverages are popular in many countries and are an important source of food, in particular for vegans, since they are rich in essential amino acids and other nutrients. In addition, consuming proteins derived from soybeans is preferred over consuming animal proteins as the production thereof has a lower environmental footprint.

In order to manufacture soy-based beverages, there is a need to provide soy base, comprising extracted water-soluble and water-dispersible compounds from soybeans, such as proteins, carbohydrates (e.g. sugars, oligosaccharides and soluble dietary fibers), oils, vitamins, minerals, carotenoids, and isoflavones.

Processes to provide soy base typically involve separating ground soybean slurry into liquid soy base, enriched in such compounds, and a leftover pulp or paste which is commonly called okara. A general overview of these processes, soy base and okara can be found in: I. Debruyne, Soy Base Extract: Soymilk and Dairy Alternatives, in Soy Applications in Food, M.N. Riaz (editor), CRC Press, Boca Raton, FL, pages 111-133,2006.

The okara, which is rich in insoluble soybean parts, such as insoluble agglomerated soybean fiber, is typically not used for human consumption. Thus at the end of the process any remaining nutrients comprised by the okara rather than by the liquid soy base are lost. Therefore there is a need for a process to provide soy base, wherein less of the water-soluble and/or water-dispersible compounds from soybeans are discarded as okara and more are comprised by the soy base.

US 2009/0317533 discloses the so-called double decanting process. The double decanting process comprises the following steps: Soaking soybeans with water at about 90 degrees Celsius followed by grinding. After grinding, the solids are mostly separated from the fluid (soy base) in the form of okara by way of a first decanting step. The okara is homogenized with added water and subjected to a second decanting step. To improve protein extraction yield from soybeans at least part of the fluid separated at this second decanting step may be fed back to the ground soybeans. The fluid separated at the first and/or second decanting step is collected and comprises the extracted proteins. The fluid may be used as such or further processed (e.g. spray-dried). The double decanting process is unable to solubilize all of the proteins comprised by the soybeans. Part of the protein is lost as it remains in the okara.

Sonication has been applied to disintegrate and solubilize animal and plant tissue components (I. E. EI'Piner, In "Ultrasound: Physical, Chemical and Biological Effects,", Chapter VII, Consultants Bureau, New York, 1964; and D. Ensminger "Ultrasonics, the Low- and High- Intensity Applications", Marcel Dekker, Inc., New York, 1973).

US 4,018,755 discloses a method to extract proteins from vegetable seeds, such as from defatted soybean flakes. Protein rich material is subjected to ultrasonic treatment for about 4 to 10 minutes.

CN1298649 discloses a method for increasing the amount of proteins extracted from water soaked soybeans, soybean cake or ground soybeans using sonification.

CN101627813 discloses a method for extracting soybean dietary fibers and proteins from soybean residue by use of synergistic ultrasonic and enzymatic treatments.

It is the object of the present invention to provide a more efficient process to provide soy base from soybeans comprising extracted water-soluble and/or water-dispersible soybean compounds, wherein less of said compounds are discarded as okara and more are comprised by the soy base. Preferably said extracted compounds are proteins, carbohydrates (such as sugars, oligosaccharides and soluble dietary fibers), oils, vitamins, minerals, carotenoids, and isoflavones. It is particularly preferred that said extracted compounds are proteins.

Conversely, it is the object of the present invention to reduce the amount of water-soluble and/or water-dispersible soybean compounds lost as okara.

### SUMMARY OF THE INVENTION

The above objective is achieved by a process to provide soy base from soybeans, wherein the process comprises two (insoluble solids) separation steps and an ultrasonic treatment step. In particular, the ultrasonic treatment is applied specifically after the first separation step on the first (okara) fraction enriched in insoluble solids.

In contrast, little or no improvement in extracting water-soluble and/or water-dispersible soybean compounds is observed when ultrasonic treatment is applied before the first separation step (i.e. on the slurry comprising ground soybeans).

Therefore the present invention is directed to a process to provide soy base from soybeans comprising the following steps:
a. providing an aqueous slurry comprising ground soybeans;
b. separating the slurry provided at step 'a' into a first fraction rich in insoluble soybean parts and a liquid second fraction poor in insoluble soybean parts, using a suitable separation means;
c. adjusting the water content of the first fraction to provide from 1 to 20 wt. % of total solids;
d. subjecting the first fraction, with from 1 to 20 wt. % of total solids to ultrasonic treatment, wherein the ultrasonic treatment is applied at a frequency of from 16 to 100 kHz, with an average energy input of at least 5 Joules per milliliter of said first fraction;
e. separating the ultrasonic treated first fraction into a third fraction rich in insoluble soybean parts and a liquid fourth fraction poor in insoluble soybean parts, using a suitable separation means;
wherein the soy base is provided as the liquid second and liquid fourth fraction.

The first and third fraction, which are rich in insoluble soybean parts are commonly referred to as okara. The liquid second and liquid fourth fractions, which are poor in insoluble soybean parts, but rich in dissolved and dispersed soybean compounds are commonly referred to as soy base or soymilk.

In particular in the process according to the invention, less of the water-soluble and/or water-dispersible soybean compounds, such as proteins, carbohydrates (such as sugars, oligosaccharides and soluble dietary fibers), oils, vitamins, minerals, carotenoids, and isoflavones are discarded as okara (i.e. as the third fraction). Conversely more of said compounds end-up as soy base (i.e. the liquid second and fourth fractions). In other words, a greater wt. % of the water-soluble and/or water-dispersible compounds, originally comprised by the soybeans, will be extracted as soy base and less lost as okara.

### DETAILED DESCRIPTION OF THE INVENTION

Weight percentage (wt. %) is based on the total weight of the composition unless otherwise stated. The amount of total solids is the sum of both the water-soluble, water-dispersible and the water-insoluble compounds. Unless otherwise specified, the term 'solids' has the meaning 'total solids'.

Throughout this specification the term 'dispersible compounds' or 'dispersible solids' indicates solids/compounds which can be stably dispersed in the liquid soy base (e.g. colloids with little or no precipitation), as provided at step 'b' and 'e'. Liquid oil droplets are an example of dispersible soybean compounds.

Throughout this specification the term 'insoluble soybean compounds' or 'insoluble soybean parts' or 'insoluble soybean solids' indicates compounds/parts/solids which will readily precipitate from the soy base as provided at step 'b' and 'e' (e.g. when left standing for a few hours).

The liquid second and fourth fractions (commonly referred to as soy base) provided at step 'b' and 'e' are aqueous liquids poor in insoluble soybean parts. Typically these liquid fractions are rich in water-soluble and/or water dispersible soybean compounds, such as proteins, carbohydrates (such as sugars, oligosaccharides and soluble dietary fibers), oils, vitamins, minerals, carotenoids, and/or isoflavones.

Preferably the liquid second and fourth fraction provided at step 'b' and step 'e' comprises at most 3 wt. %, more preferably at most 2 wt. %, even more preferably at most 1 wt. % insoluble soybean parts and still more preferably essentially no insoluble soybean parts.

Once provided by the process according to the invention, these liquid fractions can be further processed. For example they can be spray-dried to a powder.

The first and third fractions (commonly referred to as okara), are typically in the form of a paste, pulp or slurry, and are rich in the insoluble soybean parts. An example of insoluble soybean parts is insoluble fiber. Preferably the first and third fraction comprises at least 5 wt. %, more preferably at least 7 wt. % and even more preferably at least 10 wt. % insoluble soybean parts.

Preferably the water-soluble and/or water-dispersible soybean compounds according to the invention are proteins, carbohydrates (such as sugars, oligosaccharides and soluble dietary fibers), oils, vitamins, minerals, carotenoids, and/or isoflavones; and more preferably are proteins.

Water-soluble and/or water-dispersible compounds comprised by the liquid second and/or liquid fourth fraction (soy base) are considered extracted. Water-soluble and/or water-dispersible compounds comprised by the third okara fraction are considered lost.

Extraction efficiency is based on the amount of compound (e.g. protein) comprised by the soy base compared to the total amount of said compound originally comprised by the soybeans. Extraction efficiency can for example be expressed as wt. % of compound comprised by the provided soy base, based on the total amount of said compound comprised by the soybeans.

It will be appreciated that the total amount of said compound originally comprised by the soybeans may also be deduced from the amount comprised by the provided soy base plus comprised by the third okara fraction.

An example of the present invention will now be described with reference to the accompanying drawing, in which:

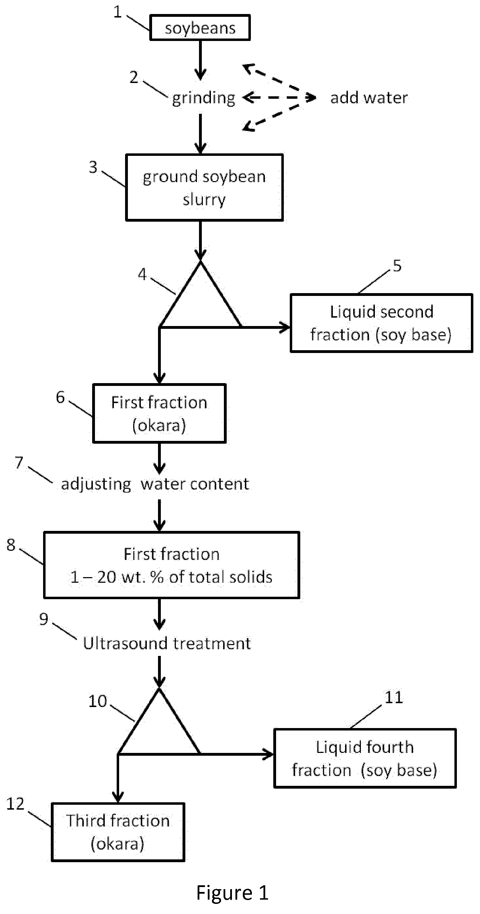

Figure 1 is a schematic representation of the process according to the invention.

### Providing an aqueous slurry comprising ground soybeans

The aqueous slurry (3) comprising ground soybeans can be made from soybeans using a suitable technique known in the art and/or optionally be commercially obtained.

For example, soybeans (1) may be soaked in water before being subjected to grinding (2). For example, soybeans (1) may be soaked at ambient temperatures for up to 24 hours. For example, soybeans (1) may be soaked by treatment with hot water, with a temperature of about 90 to 95 degrees Celsius for 5 to 20 minutes and ground (2) immediately afterwards. The latter soaking process is suitable for use in a continuous process as described in I. Debruyne, Soy Base Extract: Soymilk and Dairy Alternatives, in Soy Applications in Food, M.N. Riaz (editor), CRC Press, Boca Raton, FL, pages 111-133, 2006.

Preferably the soybeans (1) are soaked, blanched and/or dehulled prior to grinding (2).

Preferably the pH of the slurry (3) provided at step 'a', the first fraction (okara) (6, 8), the liquid second or fourth fraction (soy base) (5, 11); or any combination thereof is from 6.5 to 9 and more preferably from 7 to 8. The pH of said slurry and fractions can for example be increased by use of a suitable alkali, such as sodium bicarbonate. In particular, an alkaline pH of the water-phase improves protein solubility and/or reduces off-flavor.

Preferably the grinding (2) of soybeans (1) is done in an atmosphere comprising a substantially reduced amount of oxygen, more preferably in an atmosphere comprising at most 5 vol. % of oxygen, even more preferably at most 2.5 vol. % of oxygen, still more preferably at most 1 vol. % of oxygen and yet more preferably still comprising essentially no oxygen. For example, the grinding (2) may be done under an essentially nitrogen atmosphere or under partial or complete vacuum. In case grinding is done in an atmosphere comprising a substantially reduced amount of oxygen, the temperature at grinding is preferably from 10 to 30 degrees Celsius.

Alternatively, in case the grinding (2) is not done under an atmosphere comprising a substantially reduced amount of oxygen preferably the grinding is done at a temperature above 70 degrees Celsius, more preferably from 70 to 100 degrees Celsius and even more preferably from 80 to 90 degrees Celsius.

Lipoxygenase is an indigenous enzyme that catalyses the oxidation of unsaturated lipids resulting in off-flavor. Both conditions (grinding under a substantially reduced amount of oxygen or at elevated temperatures) limit the activity of lipoxygenase and will improve the organoleptic properties of the provided liquid (soy base) fractions (5, 11).

To provide the slurry (3) at step 'a', water can be added before, during or after the grinding (2) of the soybeans (1) or in any combination thereof. For example water may be added both before grinding (2) (e.g. for soaking) and during grinding. For example dry soybeans (1) may be ground (2) (i.e. dry-milled) and water added afterwards to provide the slurry (1) of step 'a'.

Preferably the soybeans (1) are ground (2) in the presence of water.

Suitable grinding means for the grinding (2) of soybeans (1) are known in the art. Examples of suitable grinding means are a disk mill (Supplier: FrymaKoruma), a colloid mill (Supplier: FrymaKoruma) and a hammer mill (Supplier: Buehler).

The grinding (2) of the soybeans (1) in the presence of water will improve the amount of water-soluble and water-dispersible soybean compounds released in the water-phase.

Preferably the ground slurry (3) provided at step 'a' is further subjected to mechanical mixing with water to further improve the release of water-soluble and water-dispersible soybean compounds in the water-phase.

Preferably the volume weighted mean particle size D[4,3] of the slurry (3) provided at step 'a' is from 50 to 1000 micron, more preferably from 100 to 750 micron and even more preferably from 200 to 500 micron.

The wt. % of solids of the ground slurry (3) can be controlled by adjusting the amount of water added before, during or after grinding (2). A low wt. % of solids of the slurry (e.g. having a high wt. % of water) will improve the overall extraction of water-soluble and/or water-dispersible soybean compounds.

A high wt. % of solids of the slurry (e.g. having a low wt. % of water) can improve the concentration of water-soluble and/or water-dispersible soybean compounds in liquid (soy base) fractions provided at step 'b' (5) and 'e' (11). Depending on the application this may be desirable. For example, a concentrated soy base may reduce costs and time required to provide a powder thereof.

Preferably the amount of solids of the ground slurry (3) provided at step 'a' is from 1 to 50 wt. %, more preferably from 2 to 40 wt. %, even more preferably from 4 to 30 wt. % and even more preferably from 10 to 20 wt. %.

### Separating the ground slurry into the first fraction (okara) and the liquid second fraction (soy base)

The ground slurry (3) provided at step 'a' comprises insoluble soybean parts and a water-phase with water-soluble and/or water-dispersible soybean compounds. The insoluble soybean parts are in the form of particles prone to sedimentation. By largely removing said sediment from at least a part of the water-phase, the ground slurry (3) can be separated (4) into the first fraction (okara) (6) rich in insoluble soybean parts and the liquid second fraction (soy base) (5) poor in insoluble soybean parts. Said liquid second fraction (5) comprises dissolved and dispersed soybean compounds.

Suitable techniques and equipment to separate a ground slurry (3) into the first fraction (6) and the liquid second fraction (5) are known in the art, such as filtration (e.g. by use of a filter cloth), centrifuging and decanting.

The particular technique most suitable for separation of the slurry (3) may depend on different factors, such as the average particles size. Further examples of suitable techniques to separate slurry (3) into okara and soy base can be found in I. Debruyne, Soy Base Extract: Soymilk and Dairy Alternatives, in Soy Applications in Food, M.N. Riaz (editor), CRC Press, Boca Raton, FL, pages 123 - 124.

Preferably the means to separate (4) the ground slurry (3) provided at step 'a' into the first fraction (6) and the liquid second fraction (5) at step 'b' comprises or essentially is a decanter. Decanting can suitably be applied in a continuous process.

Examples of suitable decanters are Flottweg Decanters C5E, Z5E-4/401, Flotwegg S6E Sedicanter (Germany) or Alfa Laval's G3 (Sweden).

The first fraction (okara) (6) typically still contains considerable amounts of water-soluble and/or water-dispersible soybean compounds.

### Ultrasonic treatment of the first okara fraction

According to the process of the present invention before subjecting the first fraction (okara) (6) to ultrasonic treatment (9) at step 'd', its amount of total solids is adjusted (7) to from 1 to 20 wt. %. This can be achieved by adjustment of the water content.

In case the amount of total solids of the first fraction (6) is above 20 wt. %; the amount of solids is adjusted (7) by adding water. In case the amount of solids of the first fraction (6) is below 1 wt. %; the amount of solids is adjusted (7) by removing water to increase the amount of solids. Said removal of water can be achieved by methods known in the art, such as by sieving, centrifuging, membrane filtration, evaporation, and/or a subsequent decanting.

In case the amount of total solids of the first fraction (6) provided at step 'b' already is from 1 to 20 wt. %, step 'c' can be omitted.

It was found that in case the amount of total solids of the first fraction (8) at step 'd' was within the following preferred ranges, the overall extraction of water-soluble and water-dispersible soybean compounds was further improved: preferably the amount of total solids of first fraction (6) at step 'd' is from 2 to 10 wt. %, more preferably from 2.2 to 8 wt. %, even more preferably from 2.3 to 6 wt. % and still even more preferably from 2.5 to 4 wt. %. Thus it is preferred that the total amount of solids of the first fraction (8) is adjusted at step 'c' such that it is within one of the aforementioned preferred ranges.

Ultrasonic treatment (9) according to the invention is the application of sound waves at an average frequency of from 16 to 100 kHz (kiloHertz) with an average energy input of at least 5 Joules per milliliter of first fraction (8) (with an amount of total solids of from 1 to 20 wt. %). Suitable equipment to perform ultrasonic treatment is known to the skilled person. Examples of suitable equipment include a Sonifier Model S125 (Heat Systems-Ultrasonics Inc., Plainview New York, USA), Branson sonifier 450 with 20 kHz probe or a continuous flow cell set-up such as UIP500hd, UIP4000 to UIP16000 (Supplier: Hielscher; Germany).

Surprisingly application of ultrasonic treatment (9) specifically to the first fraction having from 1 to 20 wt. % of total solids (8) increases the overall amount of water-soluble and/or water-dispersible soybean compounds extracted from the soybeans.

In contrast, application of ultrasonic treatment to the ground slurry (3) does not improve the extraction efficiency. This is also the case even when the amount of solids of the slurry (3) is also from 1 to 20 wt. %.

Preferably the ultrasonic treatment (9) at step 'd' is applied with an average frequency of from 17 to 75 kHz, more preferably of from 18 to 50 kHz and even more preferably of from 19 to 40 kHz.

Preferably the ultrasonic treatment (9) at step 'd' is applied with an average energy input of from 5 to 200 Joules, more preferably 20 to 150 Joules, even more preferably 25 to 100 Joules and still more preferably 30 to 75 Joules, per milliliter of the first fraction having from 1 to 20 wt. % of total solids (8).

The ultrasonic treatment (9) according to the invention can be applied to a continuous stream of the first fraction having from 1 to 20 wt. % of total solids (8). For example, a continuous flow set-up, such as available from Hielscher (Germany) may be used. For example, a series of ultrasonic treatment devices may be used to ensure adequate ultrasonic treatment (9) of a continuous 'stream' of the first fraction having from 1 to 20 wt. % of total solids (8). Alternatively, the first fraction having from 1 to 20 wt. % of total solids (8) can be subjected to ultrasonic treatment (9) by way of a batch process.

Ultrasonic treatment (9) is believed to further improve the overall extraction of water-soluble and/or water-dispersible soybean compounds when the first fraction having from 1 to 20 wt. % of total solids (8) at step 'd' is subjected to elevated atmospheric pressure during said treatment. Preferably during ultrasonic treatment (9), at step 'd', the first fraction having from 1 to 20 wt. % of total solids (8) is subjected to a pressure above 101 kPa, more preferably a pressure from 110 to 3000 kPa, even more preferably from 200 to 2000 kPa, still even more preferably from 300 to 1500 ka and still even more preferably from 500 to 1000 kPa.

It was found that the overall extraction efficiency of water-soluble and/or water-dispersible soybean compounds could be further improved by subjecting the first fraction having from 1 to 20 wt. % of total solids (8) at step 'd' to ultrasonic treatment (9), wherein said fraction (8) had a certain temperature.

Preferably the temperature of the first fraction having from 1 to 20 wt. % of total solids (8) during ultrasonic treatment (9) at step 'd' is from 10 to 100 degrees Celsius, more preferably from 25 to 95 degrees Celsius, even more preferably from 50 to 85 degrees Celsius.

### Separating the treated first fraction into the third fraction (okara) and the liquid fourth fraction (soy base)

The ultrasonic treated fraction comprises insoluble soybean parts and a water-phase with water-soluble and/or water-dispersible soybean compounds. The insoluble soybean parts are in the form of particles prone to sediment. By largely removing said sediment from at least a part of the water-phase, the first fraction can be separated (10) into the third fraction (okara) (12) and the liquid fourth fraction (soy base) (11).

This separation (10) at step 'e' may be done using similar/the same techniques and equipment as used in the separation (4) at step 'b'. Preferably the means to separate (10) the treated first fraction into the third fraction (okara) (12) and the liquid fourth fraction (soy base) (11) at step 'e' comprises or essentially is a decanter.

The third fraction (okara) (12) provided at step 'e' is discarded as waste. Therefore any remaining water-soluble and/or water-dispersible soybean compounds, such as proteins, carbohydrates (such as sugars, oligosaccharides and soluble dietary fibers), oils, vitamins, minerals, carotenoids, and isoflavones comprised by the third fraction (12) are lost.

Surprisingly, the process according to the present invention reduces the amount of water-soluble and/or water-dispersible compounds, originally comprised by the soybeans (1), which are discarded as third fraction (okara) (12). Conversely, the process according to the invention increases the fraction of said compounds which are comprised by the liquid second (5) and liquid fourth fractions (soy base) (11).

### The provided soy base

The liquid fractions (soy base) (5, 11) provided at step 'b' and 'e' can be collected in a suitable container, such as a bottle, vessel or drum.

The liquid second (5) and fourth fractions (11) comprise the extracted water-soluble and/or water-dispersible soybean compounds. These fractions (5, 11) may be used directly or can be further processed for example by removing part or essentially all of the water (e.g. dried to a powder). For example, water may be removed (e.g. by evaporation or membrane filtration) to reduce transportation cost and increases the concentration of the extracted compounds. Suitably, by adding water the dried soy base can subsequently be rehydrated and used to make a beverage.

Preferably the process according to the invention comprises a further step wherein the water content of the provided soy base (5, 11) is reduced, preferably to form a paste or slurry and more preferably to provide a powder.

Preferably the process according to the invention is used to improve the extraction efficiency of the soybean protein, carbohydrates (such as sugars, oligosaccharides and soluble dietary fibers), oil, vitamins, minerals, carotenoids or isoflavones or any combination thereof. More preferably the process according to the invention is used to improve the extraction efficiency of soybean protein.

### Recirculation of part of the soy base

Preferably part of the provided liquid fourth fraction (11) is re-circulated to step 'a', step 'c' or a combination thereof.

Preferably at least 50 wt. %, more preferably at least 75 wt. %, even more preferably at least 85 wt. % and still even more preferably at least 95 wt. % of the liquid fourth fraction (11) is re-circulated to step 'a' or step 'c' or in parts to step 'a' and step 'c'.

It will be appreciated that in case the whole of the liquid fourth fraction (11) is re-circulated, the soy base provided by the process will be essentially be collected as the liquid second fraction (5).

Said re-circulation of the liquid fourth fraction (11) improves the concentration of the extracted water-soluble and/or water-dispersible soybean compounds of the provided soy base.

Preferably the liquid fractions (soy base) (5, 11), the ground slurry (3) or a combination thereof are subjected to a treatment to inactivate trypsin inhibitors and/or microorganisms.

Preferably the liquid second fraction (5), the liquid fourth fraction (11), the ground slurry (3) or a combination thereof are subjected to ultra high temperature processing or vacuum flashing or a combination thereof; more preferably to ultra high temperature processing followed by vacuum flashing. It is particularly preferred that said ultra high temperature processing involves heating the one or more fractions (5, 11) and/or slurry (3) to from 121 to 150 degrees Celsius for a period of 0.5 to 15 seconds.

### Food product and beverage

The liquid second and fourth fraction provide the soy base (5, 11), which may be directly used as a food product and in particular as a beverage. Alternatively, the soy base (5, 11) may be indirectly used as a food product, and in particular as a beverage. For example, the soy base can be first dehydrated to a powder, transported to a second factory and subsequently rehydrated to a liquid beverage.

Preferably the provided soy base (5, 11) is further processed into a beverage, such processing comprising the step of mixing the soy base (5, 11) with one or more ingredients selected from the list consisting of stabilisers, structurants, carbohydrates, fruits (including juices, concentrates and isolates), emulsifiers, proteins, flavors, acids, fats, vitamins, minerals, high intensity sweeteners, salt, colorant and any combination thereof. Examples of typically soy beverage formulations are shown by Paul V. Paulsen, D. Welsby, and X.L. Huang, Ready-To-Drink Soy Protein Nutritional Beverages, in Soy Applications in Food, M.N. Riaz (editor), CRC Press, Boca Raton, FL, pages 199-226, 2006

Stabilisers are selected from pectins, carboxy methyl celluloses, soybean polysaccharides or glycol alginate esters or mixtures thereof. In particular, preferred stabilisers are methoxy pectin (HM pectin), sodium carboxy methylcellulose (CMC-Na), propylene glycol alginate ester (PGA), or water-soluble soybean polysaccharides' (SSPS), and beet-derived pectin (BD-pectin). These stabilisers may be used alone or in combination. For example, the use of such stabilisers is particularly advantageous in acidic soy beverages with a pH ranging from 3 to 5.5.

Preferably, the amount of the stabiliser used is from 0.05 to 10 wt. %, preferably 0.05 to 2 wt. %.

Preferably the weight ratio of protein:stabiliser is preferably from 1:1 to 50:1, more preferably from 2:1 to 10:1, and even more preferably from 3:1 to 5:1.

Suitable structurants or 'auxiliary stabilisers' include locust bean gum, tamarind seed polysaccharide, gelan gum, xanthan gum, guar gum, tara gum, gum Arabic, kalaya gum, carrageenan, starches and cellulose derivates, and agar.

Suitable carbohydrates include sugars, starches, and maltodextrin. Suitable fruits include apple, apricot, banana, grapefruit, grape, guava, lemon, lime, mandarine, mango, orange, peach, pommelo, pumpkin, squash, tangarine, tomato and mixtures thereof. Suitable acids include lactic acid, malic acid, citric acid, phosphoric acid, hydrochloric acid and ascorbic acid. Suitable minerals include calcium, magnesium, iron and zinc. Suitable high intensity sweeteners include sucralose and aspartame.

When additional protein sources are added, these are preferably restricted to non-animal proteins. Preferably the beverage made according to the present invention comprises substantially no dairy proteins and more preferably is dairy-free.

The soy beverage can be prepared by any suitable method known in the art.

Preferably the provided soy base (5, 11) is further processed into a beverage. For example, such processing preferably comprises at least one of the following steps: heat preservation (e.g. pasteurisation and/or sterilisation), homogenisation or packaging. More preferably such processing comprises a combination of said steps.

Preferably the beverages made according to the process of the invention comprises from 0.2 to 5 wt. %, more preferably from 0.3 to 4 wt. % and even more preferably from 0.6 to 3 wt. % of soy protein, based on the total weight of the beverage.

The invention is further illustrated by means of the following non-limiting examples.

### EXAMPLES

### Protein analysis

The amount of proteins was measured with the Dumas method, using a Vario Max CNS from Elementar. The Dumas method is a combustion technique for the quantitative measurement of the carbon, nitrogen and sulphur content in a sample. A pre-weighed sample is introduced into the combustion chamber which is heated at 900 degrees Celsius. An excess quantity of pure oxygen is added to completely combust the sample to carbon dioxide, water and nitrogen. Water is removed from the system by an osmoses system and chemical scrubber. A column separates the carbon dioxide from the nitrogen gasses. A thermal conductivity detector is used to measure the amount of carbon, nitrogen and sulphur. TCD response is set to 10.000 mV. The peak shapes of all samples measured were checked, so peaks did not exceed ∼8.000mV. The amount of proteins of a sample was determined by multiplying the amount of measured nitrogen with a factor of 6.25.

### Particle size measurement

The volume weighted mean D[4,3] particle size of a sample was measured using a Malvern Mastersizer 2000, Malvern Instruments, UK according to supplier instructions. The volume average particle size measurement is based on the static light scattering. A refractive index of 1.45 for proteins and 1.33 for background was used. The Malvern software was used to calculate the particle size distributions. The Volume weighted mean D[4,3] was used as a value to compare between samples.

### Total solids determination

The total amount of solids (insoluble and soluble solids) was measured with a microwave moisture/solids analyser (CEM SMART System5). Two pads were zeroed and the sample was added. A temperature of 110 degrees Celsius was used to determine the moisture and hence derive the amount of solids of a sample.

### Example 1 and Comparative A

The process of Example 1 is a process according to the invention.

In the process of Example 1 and Comparative A 140 grams of soybeans (Unilever Soy Factory, moisture content approximately 6-7 wt. %) were ground (milled) in the presence of 864 grams of water in a Varoma (Supplier: Thermomix, Germany) for about 10 minutes at 80 degrees Celsius to provide a coarse slurry. Hereafter a second fine grinding step was done in a labmixer/homogenizer Silverson type L4RT-A (Supplier: Silverson Machines International, UK) for approximately 20 min. Stepwise, the speed was increased (about every 5 minutes) from 3,000 to a maximum of 6,500 rpm. This resulted in a fine ground soybean slurry.

The fine ground soybean slurry had a volume weighted mean particle size (D[4,3]) of 285 micrometer and about 13.3 wt. % of solids in case of both Example 1 and Comparative A.

The ground slurries, which were not further diluted, were directly subjected to a separation step using a soycloth with a pore size of 0.5 mm (Supplier: ProSoya soybags, Canada) to provide a first (okara) fraction and a liquid second soy base fraction.

The first fraction of Example 1 and of Comparative A were diluted with water to provide a total amount of solids of 2.8 wt. %.

In case of Example 1, the diluted first fraction was subjected to an ultrasonic treatment of 39 Joules per milliliter, at a temperature of 50 degrees Celsius and at a frequency of 20 kHz; using a Branson sonifier 450 with a 20 kHz probe.

In case of Comparative A , the diluted first fraction was not subjected to ultrasonic treatment, but simply heated to a temperature of 50 degrees Celsius for a comparable period as the first fraction of Example 1.

Next the first fraction of Example 1 and the first fraction of Comparative A were subjected to a second separation step, also using a soycloth with a pore size of 0.5 mm (Supplier: ProSoya soybags, Canada) to provide a third (okara) fraction; and a liquid fourth (soy base) fraction.

Table 1 shows the protein extraction efficiency of Example 1 and Comparative A expressed as wt. % of proteins comprised by the liquid second and liquid fourth soy base fractions, based on the total weight of soybean protein (i.e. originally comprised by the soybeans) (Table 1).

Table 1 also shows the wt. % of total solids comprised by said liquid soy base fractions, based on the total weight of soybean solids (i.e. originally comprised by the by soybeans).

**Table 1 Soybean extraction efficiency of Example 1 and Comparative A.**

| | wt. % of protein¹ | wt. % of total solids² |
|---|---|---|
| Example 1 | 78.2 | 75.2 |
| Comparative A | 67.0 | 64.7 |

| | | |
|---|---|---|
| 1: Amount of protein comprised by the liquid second and liquid fourth fraction, based on the total amount of soybean protein of the soybeans. 2: Amount of total solids comprised by the liquid second and liquid fourth fraction, based on the total amount of total solids of the soybeans. | | |

Clearly the process of Example 1 is able to extract more water-soluble and water-dispersible soybean compounds from soybeans as soy base than Comparative A.

### Comparative B and Comparative C

In the process of Comparative B and C, 140 grams of soybeans (Unilever Soy Factory, moisture content approximately 6-7 wt. %) were ground (milled) in the presence of 864 grams of water in a Varoma (Supplier: Thermomix, Germany) for about 10 minutes at 80 degrees Celsius to provide a coarse slurry. Hereafter a second fine grinding step was done in a labmixer/homogenizer Silverson type L4RT-A (Supplier: Silverson Machines International, UK) for approximately 20 min. Stepwise, the speed was increased (about every 5 minutes) from 3,000 to a maximum of 6,500 rpm. This resulted in a fine ground soybean slurry. The fine ground slurry had a volume weighted mean particle size (D[4,3]) of 264 micrometer and about 13.5 wt. % of solids in case of Comparative B and Comparative C.

The water content of both slurries was adjusted by adding water to provide a total amount of solids of 2.8 wt. % in both cases.

In case of Comparative C, the diluted ground slurry was subjected an ultrasonic treatment of 39 Joules per milliliter, at a temperature of 50 degrees Celsius and at a frequency of 20 kHz; using a Branson sonifier 450 with a 20 kHz probe. Thus the ultrasonic treatment was performed directly on the ground soybean slurry, i.e. the process differs from that of the invention in that no separation step was performed prior to the ultrasonic treatment.

In case of Comparative B, the diluted ground slurry was not subjected to ultrasonic treatment, but simply heated to a temperature of 50 degrees Celsius for a comparable period as the soybean slurry of Comparative C.

Next, the slurries were subjected to a separation step using a soycloth with a pore size of 0.5 mm (Supplier: ProSoya soybags, Canada) to provide a first fraction (okara) and a liquid second fraction (soy base).

The protein extraction efficiency (of Comparative B and C) is expressed as wt. % of proteins comprised by the liquid second fraction, based on the total weight of soybean protein (i.e. originally comprised by the by soybeans) (Table 2).

Table 2 also shows the wt. % of total solids comprised by the liquid second fraction, based on the total weight of soybean solids (i.e. originally comprised by the soybeans).

In the process of Comparative B and C no third fraction or fourth fraction were formed.

**Table 2 Soybean protein extraction efficiency of Comparatives B and C**

| | wt. % of protein¹ | wt. % of total solids² |
|---|---|---|
| Comparative B | 77.2 | 71.6 |
| Comparative C | 75.2 | 66.5 |

| | | |
|---|---|---|
| 1: Amount of protein comprised by the liquid second fraction, based on the total amount of soybean protein of the soybeans. 2: Amount of total solids comprised by the liquid second fraction, based on the total amount of total solids of the soybeans. | | |

### Example 2 and Comparative D

The process of Example 2 is a process according to the invention.

In the process of Example 2 and Comparative D, 140 grams of soybeans (Unilever Soy Factory, moisture content approximately 6-7 wt. %) were ground (milled) in the presence of 860 grams of water in a Varoma (Supplier: Thermomix, Germany) for about 10 minutes at 80 degrees Celsius to provide a coarse slurry. Hereafter a second fine grinding step was done in a labmixer/homogenizer Silverson type L4RT-A (Supplier: Silverson Machines International, UK) for approximately 20 min. Stepwise, the speed was increased (about every 5 minutes) from 3,000 to a maximum of 6,500 rpm. This resulted in a fine ground soybean slurry. The fine ground soybean slurry of Example 2 had a volume weighted mean particle size (D[4,3]) of 277 micrometer and comparative D of 235 micrometer. Both slurries had a total amount of solids of about 13.5 wt. %.

The water content was adjusted in both slurries by adding water to provide a total amount of solids of 2.8 wt. %.

Both the diluted soybean slurries of the process of Example 2 and the process of Comparative D were subjected to an ultrasonic treatment of 39 Joules per milliliter, at a temperature of 50 degrees Celsius and at a frequency of 20 kHz; using a Branson sonifier 450 with a 20 kHz probe.

Next, the treated slurries were subjected to a separation step using a soycloth with a pore size of 0.5 mm (Supplier: ProSoya soybags, Canada) to provide a first fraction (okara) and a liquid second fraction (soy base).

The water content of the first fraction of Example 2 and the first fraction of Comparative D were again adjusted by adding water to provide a total amount of solids of 2.8 wt. %.

In case of Example 2, the diluted first fraction was subjected to an ultrasonic treatment of 39 Joules per milliliter, at a temperature of 50 degrees Celsius and at a frequency of 20 kHz; using a Branson sonifier 450 with a 20 kHz probe.

The diluted first fraction of Comparative D, was not subjected to ultrasonic treatment, but simply heated to a temperature of 50 degrees Celsius for a comparable period as the diluted first fraction of Example 2.

Next the first fraction of Example 2 and the first fraction of Comparative D were subjected to a second separation step, also using a soycloth with a pore size of 0.5 mm (Supplier: ProSoya soybags, Canada) to provide a third fraction (okara) and a liquid second fraction (soy base).

The protein extraction efficiency (of Example 2 and Comparative D) is expressed as wt. % of proteins comprised by the liquid second and liquid fourth fraction, based on the total weight of soybean protein (i.e. originally comprised by the by soybeans) (Table 3).

Table 3 also shows the wt. % of total solids comprised by said liquid fractions, based on the total weight soybean solids (i.e. originally comprised by the by soybeans).

**Table 3 Soybean protein extraction efficiency of Example 2 and Comparatives D**

| | wt. % of protein¹ | wt. % of total solids² |
|---|---|---|
| Example 2 | 83.0 | 73.9 |
| Comparative D | 74.4 | 68.8 |

| | | |
|---|---|---|
| 1: Amount of protein comprised by the liquid second fraction and liquid fourth fraction, based on the total amount of soybean protein of the soybeans. 2: Amount of total solids comprised by the liquid second fraction and liquid fourth fraction, based on the total amount of total solids of the soybeans. | | |

Clearly the process of Example 2 is able to extract more water-soluble and water-dispersible soybean compounds from soybeans as soy base than Comparative D.

## Claims

1. Process to provide soy base (5, 11) from soybeans (1) comprising the following steps:
a. Providing an aqueous slurry comprising ground soybeans (3);
b. Separating (4) the slurry (3) provided at step 'a' into a first fraction (6) rich in insoluble soybean parts and a liquid second fraction (5) poor in insoluble soybean parts, using a suitable separation means;
c. Adjusting the water content (7) of the first fraction (6) to provide from 1 to 20 wt. % of total solids (8);
d. Subjecting the first fraction (8), with from 1 to 20 wt. % of total solids to ultrasonic treatment (9), wherein the ultrasonic treatment is applied at a frequency of from 16 to 100 kHz, with an average energy input of at least 5 Joules per milliliter of said first fraction (8);
e. Separating (10) the ultrasonic treated first fraction (8) into a third fraction (12) rich in insoluble soybean parts and a liquid fourth fraction (11) poor in insoluble soybean parts, using a suitable separation means;
wherein the soy base is provided as the liquid second (5) and liquid fourth fraction (11).

2. Process according to claim 1, wherein the pH of the slurry (3) provided at step 'a', the first fraction (6, 8), the liquid second (5) or fourth fraction (11); or any combination thereof is from 6.5 to 9 and more preferably from 7 to 8.

3. Process according to claim 1 or claim 2, wherein the volume weighted mean particle size D[4,3] of the slurry (3) provided at step 'a' is from 50 to 1000 micron, preferably from 100 to 750 micron and more preferably from 200 to 500 micron.

4. Process according to any one of claims 1 to 3, wherein the separation means at step 'b' comprises or essentially is a decanter.

5. Process according to any one of claims 1 to 4, wherein the total amount of solids of the first fraction (8) at step 'c' is adjusted to from 2 to 10 wt. %, preferably from 2.2 to 8 wt. %, more preferably from 2.3 to 6 wt. % and even more preferably from 2.5 to 4 wt. %.

6. Process according to any one of claims 1 to 5, wherein the ultrasonic treatment (9) at step 'd' is applied with an average frequency of from 17 to 75 kHz, more preferably of from 18 to 50 kHz and even more preferably of from 19 to 40 kHz.

7. Process according to any one of claims 1 to 6, wherein the ultrasonic treatment (9) at step 'd' is applied with an average energy input of from 5 to 200 Joules, more preferably 20 to 150 Joules, even more preferably 25 to 100 Joules and still more preferably 30 to 75 Joules, per milliliter of first fraction (8).

8. Process according to any one of claims 1 to 7, wherein at step 'd' during ultrasonic treatment (9) the first fraction (8) is subjected to a pressure above 101 kPa, more preferably a pressure from 110 to 3000 kPa, even more preferably from 200 to 2000 kPa, still more preferably from 300 to 1500 ka and still even more preferably from 500 to 1000 kPa.

9. Process according to any one of claims 1 to 8, wherein the temperature of the first fraction (8) during ultrasonic treatment at step 'd' is from 10 to 100 degrees Celsius, more preferably from 25 to 95 degrees Celsius, even more preferably from 50 to 85 degrees Celsius.

10. Process according to any one of claims 1 to 9, wherein the separation means at step 'e' comprises or essentially is a decanter.

11. Process according to any one of claims 1 to 10, wherein at least 50 wt. %, more preferably at least 75 wt. %, even more preferably at least 85 wt. % and still more preferably at least 95 wt. % of the liquid fourth fraction (11) is re-circulated to step 'a' or step 'c' or in parts to step 'a' and step 'c'.

12. Process according to any one of claims 1 to 11, wherein preferably the liquid second fraction (5), the liquid fourth fraction (11), the ground soybean slurry (3) or a combination thereof is subjected to ultra high temperature processing or vacuum flashing or a combination thereof; more preferably to ultra high temperature processing followed by vacuum flashing; and even more preferably wherein said ultra high temperature processing involves heating the one or more fractions (5, 11) or slurry (3) to from 121 to 150 degrees Celsius for a period of 0.5 to 15 seconds.

13. Process according to any one of claims 1 to 12, comprising a further step wherein the water content of the soy base (5, 11) is reduced, preferably to form a paste or slurry and more preferably to provide a powder.

14. Process according to any one of claims 1 to 13, wherein the provided soy base (5, 11) is further processed into a beverage, such processing comprising the step of mixing the soy base (5, 11) with one or more ingredients selected from the list consisting of stabilisers, structurants, carbohydrates, fruits, emulsifiers, proteins, flavors, acids, fats, vitamins, minerals, high intensity sweeteners, salt, colorant and any combination thereof.

15. Process according to any one of claims 1 to 14, wherein the provided soy base (5, 11) is further processed into a beverage, such processing comprising at least one of the following steps: heat preservation; homogenisation or packaging; and more preferably comprising a combination of said steps.

## Patentansprüche

1. Verfahren zum Bereitstellen von Sojabasis (5, 11) aus Sojabohnen (1), das die folgenden Schritte umfasst:
a. Bereitstellen einer wässrigen Aufschlämmung, die gemahlene Sojabohnen (3) umfasst;
b. Auftrennen (4) der Aufschlämmung (3), die in Schritt 'a' bereitgestellt wird, in eine erste Fraktion (6), die reich an unlöslichen Sojabohnen-Bestandteilen ist, und eine flüssige zweite Fraktion (9), die arm an unlöslichen Sojabohnen-Bestandteilen ist, unter Verwendung von geeigneten Trennmitteln;
c. Anpassen des Wassergehalts (7) der ersten Fraktion (6), um 1 bis 20 Gew.-% der gesamten Feststoffe bereitzustellen;
d. Behandeln mit Ultraschall (9) der ersten Fraktion (8) mit 1 bis 20 Gew.-% der gesamten Feststoffe, wobei die Ultraschallbehandlung mit einer Frequenz von 16 bis 100 kHz angewendet wird, mit einer mittleren Energiezufuhr von mindestens 5 Joule pro Milliliter der ersten Fraktion (8);
e. Auftrennen (10) der ultraschallbehandelten ersten Fraktion (8) in eine dritte Fraktion (12), die reich an unlöslichen Sojabohnen-Bestandteilen ist, und eine flüssige vierte Fraktion (11), die arm an unlöslichen Sojabohnen-Bestandteilen ist, unter Verwendung von geeigneten Trennmitteln;
wobei die Sojabasis als die flüssige zweite (5) und flüssige vierte Fraktion (11) bereitgestellt wird.

2. Verfahren nach Anspruch 1, wobei der pH-Wert der in Schritt 'a' bereitgestellten Aufschlämmung (3) aus der ersten Fraktion (6, 8), der flüssigen zweiten (5) oder vierten Fraktion (11) oder einer beliebigen Kombination davon 6,5 bis 9 und besonders bevorzugt 7 bis 8 beträgt.

3. Verfahren nach Anspruch 1 oder Anspruch 2, wobei die volumengewichtete mittlere Teilchengröße D[4,3] der in Schritt 'a' bereitgestellten Aufschlämmung (3) 50 bis 1000 Mikrometer, bevorzugt 100 bis 750 Mikrometer und besonders bevorzugt 200 bis 500 Mikrometer beträgt.

4. Verfahren nach einem der Ansprüche 1 bis 3, wobei die Trennmittel in Schritt 'b' einen Dekanter umfassen oder im Wesentlichen einem Dekanter entsprechen.

5. Verfahren nach einem der Ansprüche 1 bis 4, wobei die gesamte Feststoffmenge der ersten Fraktion (8) in Schritt 'c' auf 2 bis 10 Gew.-%, bevorzugt 2,2 bis 8 Gew.-%, besonders bevorzugt 2,3 bis 6 Gew.-%, und ganz besonders bevorzugt 2,5 bis 4 Gew.-% eingestellt wird.

6. Verfahren nach einem der Ansprüche 1 bis 5, wobei die Ultraschallbehandlung (9) in Schritt 'd' mit einer mittleren Frequenz von 17 bis 75 kHz, besonders bevorzugt 18 bis 50 kHz und ganz besonders bevorzugt 19 bis 40 kHz angewendet wird.

7. Verfahren nach einem der Ansprüche 1 bis 6, wobei die Ultraschallbehandlung (9) in Schritt 'd' mit einer mittleren Energiezufuhr von 5 bis 200 Joule, besonders bevorzugt 20 bis 150 Joule, ganz besonders bevorzugt 25 bis 100 Joules und noch mehr bevorzugt 30 bis 75 Joule pro Milliliter der ersten Fraktion (8) angewendet wird.

8. Verfahren nach einem der Ansprüche 1 bis 7, wobei während der Ultraschallbehandlung (9) in Schritt 'd' die erste Fraktion (8) einem Druck von mehr als 101 kPa, besonders bevorzugt 110 bis 3000 kPa, ganz besonders bevorzugt 200 bis 2000 kPa, noch mehr bevorzugt 300 bis 1500 kPa und sogar noch mehr bevorzugt von 500 bis 1000 kPa ausgesetzt wird.

9. Verfahren nach einem der Ansprüche 1 bis 8, wobei die Temperatur der ersten Fraktion (8) bei der Ultraschallbehandlung in Schritt 'd' 10 bis 100 Grad Celsius, besonders bevorzugt 25 bis 95 Grad Celsius, ganz besonders bevorzugt 50 bis 85 Grad Celsius beträgt.

10. Verfahren nach einem der Ansprüche 1 bis 9, wobei die Trennmittel in Schritt 'e' einen Dekanter umfassen oder im Wesentlichen einem Dekanter entsprechen.

11. Verfahren nach einem der Ansprüche 1 bis 10, wobei mindestens 50 Gew.-%, besonders bevorzugt mindestens 75 Gew.-%, ganz besonders bevorzugt mindestens 85 Gew.-%, und sogar noch mehr bevorzugt mindestens 95 Gew.-% der flüssigen vierten Fraktion (11) erneut Schritt 'a' oder Schritt 'c' oder teilweise Schritt 'a' und teilweise Schritt 'c' zugeführt wird.

12. Verfahren nach einem der Ansprüche 1 bis 11, wobei die flüssige zweite Fraktion (5), die flüssige vierte Fraktion (11), die Aufschlämmung (3) gemahlener Sojabohnen oder eine Kombination davon bevorzugt einer Ultrahochtemperatur-Verarbeitung oder Entspannungsverdampfung im Vakuum oder einer Kombination davon und besonders bevorzugt einer Ultrahochtemperatur-Verarbeitung, auf die eine Entspannungsverdampfung im Vakuum folgt, unterworfen wird, wobei ganz besonders bevorzugt die Ultrahochtemperatur-Verarbeitung das Erhitzen der einen oder mehreren Fraktionen (5,11) oder der Aufschlämmung (3) auf 121 bis 150 Grad Celsius für eine Zeitdauer von 0,5 bis 15 Sekunden beinhaltet.

13. Verfahren nach einem der Ansprüche 1 bis 12, das einen weiteren Schritt umfasst, wobei der Wassergehalt der Sojabasis (5, 11) reduziert wird, bevorzugt um eine Paste oder eine Aufschlämmung und besonders bevorzugt, um ein Pulver bereitzustellen.

14. Verfahren nach einem der Ansprüche 1 bis 13, wobei die bereitgestellte Sojabasis (5, 11) zu einem Getränk weiterverarbeitet wird, wobei ein derartiges Verarbeiten den Schritt des Mischens der Sojabasis (5, 11) mit einer oder mehreren Zutaten aus der folgenden Liste umfasst: Stabilisatoren, Strukturanten, Kohlenhydrate, Früchte, Emulgatoren, Proteine, Aromen, Säuren, Fette, Vitamine, Mineralien, hochintensive Süßstoffe, Salz, Farbstoffe und eine beliebige Kombination davon.

15. Verfahren nach einem der Ansprüche 1 bis 14, wobei die bereitgestellte Sojabasis (5, 11) zu einem Getränk weiterverarbeitet wird, wobei ein derartiges Verarbeiten mindestens einen der folgenden Schritte umfasst: Wärmekonservierung; Homogenisierung oder Verpacken; und besonders bevorzugt eine Kombination dieser Schritten umfasst.

## Revendications

1. Procédé pour fournir une base de soja (5, 11) à partir de graines de soja (1) comprenant les étapes suivantes consistant à :
a. fournir une suspension aqueuse comprenant des graines de soja broyées (3) ;
b. séparer (4) la suspension (3) fournie dans l'étape 'a' dans en première fraction (6) riche en parties de graines de soja insolubles et une seconde fraction liquide (5) médiocre en parties de soja insolubles, en utilisant un moyen de séparation approprié ;
c. ajuster la teneur en eau (7) de la première fraction (6) pour fournir de 1 à 20 % en masse de matières solides totales (8) ;
d. soumettre la première fraction (8), avec de 1 à 20 % en masse de matières solides totales à un traitement aux ultrasons (9), dans lequel le traitement aux ultrasons est appliqué à une fréquence de 16 à 100 kHz, avec un apport d'énergie moyen d'au moins 5 Joules par millimètre de ladite première fraction (8) ;
e. séparer (10) la première fraction traitée aux ultrasons (8) en une troisième fraction (12) riche en parties de graines de soja insolubles et en une quatrième fraction liquide (11) médiocre en parties de graines de soja insolubles, en utilisant un moyen de séparation approprié ;
dans lequel la base de soja est fournie comme le second liquide (5) et quatrième fraction liquide (11).

2. Procédé selon la revendication 1, dans lequel le pH de la suspension (3) fournie dans l'étape 'a', de la première fraction (6, 8), du second liquide (5) ou quatrième fraction (11) ; ou de toute combinaison de celles-ci est de 6,5 à 9 et encore mieux de 7 à 8.

3. Procédé selon la revendication 1 ou la revendication 2, dans lequel la taille de particule moyenne pondérée en volume D[4,3] de la suspension (3) fournie dans l'étape 'a' est de 50 à 1 000 microns, de préférence de 100 à 750 microns et encore mieux de 200 à 500 microns.

4. Procédé selon l'une quelconque des revendications 1 à 3, dans lequel le moyen de séparation dans l'étape 'b' comprend ou est essentiellement un décanteur.

5. Procédé selon l'une quelconque des revendications 1 à 4, dans lequel la quantité totale de matières solides de la première fraction (8) dans l'étape 'c' est ajustée à de 2 à 10 % en masse, de préférence de 2,2 à 8 % en masse, encore mieux de 2,3 à 6 % en masse et bien mieux encore de 2,5 à 4 % en masse.

6. Procédé selon l'une quelconque des revendications 1 à 5, dans lequel le traitement aux ultrasons (9) dans l'étape 'd' est appliqué avec une fréquence moyenne de 17 à 75 kHz, encore mieux de 18 à 50 kHz et bien mieux encore de 19 à 40 kHz.

7. Procédé selon l'une quelconque des revendications 1 à 6, dans lequel le traitement aux ultrasons (9) dans l'étape 'd' est appliqué avec un apport d'énergie moyen de 5 à 200 Joules, de préférence de 20 à 150 Joules, encore mieux de 25 à 100 Joules et bien mieux encore de 30 à 75 Joules, par millimètre de première fraction (8).

8. Procédé selon l'une quelconque des revendications 1 à 7, dans lequel dans l'étape 'd' pendant le traitement aux ultrasons (9) la première fraction (8) est soumise à une pression supérieure à 101 kPa, de préférence une pression de 110 à 3 000 kPa, encore mieux de 200 à 2 000 kPa, bien mieux encore de 300 à 1 500 kPa et particulièrement de préférence de 500 à 1 000 kPa.

9. Procédé selon l'une quelconque des revendications 1 à 8, dans lequel la température de la première fraction (8) pendant le traitement aux ultrasons dans l'étape 'd' est de 10 à 100 degrés Celsius, de préférence de 25 à 95 degrés Celsius, encore mieux de 50 à 85 degrés Celsius.

10. Procédé selon l'une quelconque des revendications 1 à 9, dans lequel le moyen de séparation dans l'étape 'e' comprend ou est essentiellement un décanteur.

11. Procédé selon l'une quelconque des revendications 1 à 10, dans lequel au moins 50 % en masse, de préférence au moins 75 % en masse, encore mieux au moins 85 % en masse et bien mieux encore au moins 95 % en masse de la quatrième fraction liquide (11) sont remis en circulation vers l'étape 'a' ou l'étape 'c' ou en parties vers l'étape 'a' et l'étape 'c'.

12. Procédé selon l'une quelconque des revendications 1 à 11, dans lequel la seconde fraction liquide (5), la quatrième fraction liquide (11), la suspension de graines de soja broyées (3) ou une combinaison de celles-ci est de préférence soumise à un traitement à température ultra-élevée ou un flash sous vide ou une combinaison de ceux-ci ; encore mieux à un traitement à température ultra-élevée suivi par un flash sous vide ; et bien mieux encore dans lequel ledit traitement à température ultra-élevée implique le chauffage de la une ou plusieurs fractions (5, 11) ou suspension (3) à de 121 à 150 degrés Celsius sur une durée de 0,5 à 15 secondes.

13. Procédé selon l'une quelconque des revendications 1 à 12, comprenant une étape supplémentaire dans laquelle la teneur en eau de la base de soja (5, 11) est réduite, de préférence pour former une pâte ou une suspension et encore mieux pour fournir une poudre.

14. Procédé selon l'une quelconque des revendications 1 à 13, dans lequel la base de soja fournie (5, 11) est de plus transformée en une boisson, une telle transformation comprenant l'étape de mélange de la base de soja (5, 11) avec un ou plusieurs ingrédients choisis dans la liste constituée de stabilisants, structurants, carbohydrates, fruits, émulsionnants, protéines, arômes, acides, graisses, vitamines, minéraux, édulcorants d'intensité élevée, sel, colorant, et combinaisons quelconques de ceux-ci.

15. Procédé selon l'une quelconque des revendications 1 à 14, dans lequel la base de soja fournie (5, 11) est encore transformée en une boisson, une telle transformation comprenant au moins une des étapes suivantes : conservation à la chaleur ; homogénéisation ou emballage ; et encore mieux comprenant une combinaison desdites étapes.
